# EUROPEAN PATENT SPECIFICATION

(11) **EP 1 115 276 B1**
(45) Date of publication and mention of the grant of the patent: **28.08.2002**
(21) Application number: 99969307.0
(22) Date of filing: 22.09.1999
(51) Int. Cl.: A01F 15/07, B65H 16/02, B65B 11/04

(54) **A HOLDER FOR FILM MATERIAL IN ROLL FORM**
HALTER FÜR FILMMATERIAL IN ROLLENFORM
DISPOSITIF DE RETENUE POUR FILM EN ROULEAU

(30) Priority: 23.09.1998 IE 980788; 16.11.1998 IE 980946
(43) Date of publication of application: 18.07.2001
(73) Proprietor: Welmount Limited, Kilmaine, County Mayo (IE)
(72) Inventor: MCHALE, Padraic, Christopher, County Mayo (IE); MCHALE, Martin, County Mayo (IE); SHERIDAN, Gerard, Patrick, Kilmaine, County Mayo (IE)
(74) Representative: Gorman, Francis Fergus
(86) International application number: IE9900100
(87) International publication number: WO00016607

(56) References cited:
- EP-A- 0 110 110
- EP-A- 0 426 308
- CA-A- 1 258 033
- GB-A- 2 188 606
- US-A- 4 827 700

## Description

The present invention relates to a holder for film material in roll form, and in particular though not limited to, a holder for film material in roll form of the type typically used for wrapping baled material, for example, bales of hay, silage, straw, fodder and the like. Such film material, typically, is in the form of a plastics film, and typically, a black plastics film material. The invention also relates to a bale wrapper for wrapping a bale, for example, a bale of hay, silage, straw, fodder such as, a relatively large cylindrical or parallelepiped bale of hay, silage, straw, fodder or other material.

Bale wrappers for wrapping relatively large cylindrical bales of silage, typically referred to as round bales with film material are well known. Bale wrappers for wrapping relatively large parallelepiped bales of silage, typically referred to as square or rectangular bales are also well known. For example, PCT Specification No. WO 94/06272 discloses a round bale wrapper, and a round bale wrapper is also disclosed in British Patent Specification No. GB-A-2,249,077. Square bale wrappers are disclosed in European Patent Specification No. EP-A-0543792, PCT Specification No. W094/01997, and PCT Specification No. WO95/34196.

Round bale wrappers of the type disclosed in PCT Specification No. W094/06272 typically comprise a main framework which may be tractor mounted or tractor trailed. In the case of a tractor trailed bale wrapper, the main framework is supported on a pair of ground engaging wheels. A bale support table is rotatably mounted on the main framework. Spaced apart rollers mounted on the rotatable bale support table rotate the bale about a horizontal axis simultaneously while the bale support table is rotated about a vertical axis for imparting two axes rotation to the bale during wrapping. Typically, a holder on an upstanding support extending upwardly from the main framework carries a single roll of plastics film material from which the film material is dispensed through a pair of tensioning rollers for wrapping the bale. The roll axis and the axes of the tensioning rollers extend vertically. With the film material attached to the bale as the bale is rotated about the vertical and horizontal axes simultaneously, the film material is drawn from the roll through the tensioning rollers and wrapped around the bale.

Alternative constructions of bale wrappers are disclosed in European Specification No. EP-A-0543792, PCT Specification Nos. W094/01997 and WO95/34196. These bale wrappers are particularly suitable for wrapping square and rectangular bales, and comprise two pairs of spaced apart horizontal rollers for supporting and rotating the bale about a horizontal axis. A carrier framework carries one or two holders which are similar to that already discussed for carrying one or two rolls of plastics film material with each roll axis extending vertically. The carrier framework revolves the rolls of film material about a vertical axis around the bale simultaneously while the bale is being rotated about its horizontal axis. With the film material attached to the bale, as the rolls of film material are revolved around the bale, the film material is drawn from the rolls to wrap the bale. Such construction of bale wrapping apparatus is suitable for round, square and rectangular bales, and in particular for relatively large square and rectangular bales.

In all cases, each roll of plastics film material is carried on the corresponding holder by a pair of vertically extending and axially aligned spaced apart spigots. The spigots engage axially opposite ends of a bore extending through a reel of the roll. One of the spigots, namely, the lower of the two spigots typically extends upwardly from a lower support arm extending sidewardly from the upstanding support, and the upper of the two spigots extends downwardly from a corresponding sidewardly extending upper support arm. In general, the spigots rotatably carry bearings for engaging the reel of the roll for in turn permitting rotation of the roll about its longitudinally extending geometrical central axis. The two spigots, in general, are fixed in position relative to their corresponding support arms. The bearing on the lower of the two spigots is axially fixed at the distal end of lower spigot. The bearing on the upper spigot is axially slidable along the upper spigot for facilitating replacement of a spent roll, and is spring urged downwardly towards the distal end of the upper spigot for engagement with the reel of the roll.

In general, to remove a spent roll for replacement with a full roll, the bearing on the upper spigot is urged upwardly for facilitating disengagement of the reel of the spent roll from the two spigots. Typically, an operator grips the reel of the spent roll and urges the reel upwardly against the bearing on the upper spigot for in turn urging the bearing upwardly on the upper spigot. When the reel has been urged upwardly a sufficient distance that it has completely disengaged and cleared the lower spigot the lower end of the reel is angled outwardly from its vertical orientation. Once the reel has cleared the lower spigot the reel is lowered and disengaged from the bearing on the upper spigot, thereby allowing the bearing on the upper spigot to be urged downwardly under spring action.

A full roll is then secured between the spigots using the following procedure. The roll is offered up to the upper spigot and the bearing on the upper spigot is engaged in the reel of the full roll. The full roll is then urged upwardly against the bearing on the upper spigot, thereby urging the bearing upwardly against the spring action. On the full roll and the bearing on the upper spigot being urged sufficiently upwardly that the roll clears the lower spigot, the roll is then angled about the upper spigot into axial alignment with the upper and lower spigots, and then lowered for engaging the bearing on the lower spigot. In this way the reel of the full roll is engaged and secured between the bearings on the upper and lower spigots.

This construction of a holder for rolls of film material for bale wrappers suffers from a number of disadvantages. In particular, significant difficulty can be experienced in engaging a full roll of film material between the two spigots. Firstly, a full roll of film material are relatively heavy, and in many cases can weigh up to 30 Kgs. Thus, a relatively large effort is required by an operator to lift such a roll. Secondly, the difficulty is compounded by the fact that the bearing on the upper spigot must be raised against the spring urging action of the spring on the upper spigot which is provided for urging the bearing downwardly into engagement with the reel. The only feasible way of raising the upper bearing is to engage the bearing by the full roll, and then urge the roll upwardly for a turn urging the upper bearing against the urging force of the spring until the roll clears the lower spigot. Thus, not only does an operator have to contend with the weight of a full roll, which is not insignificant, but the operator also has to contend with the additional spring force of the spring of the upper spigot when engaging a full roll on the spigots. This is undesirable. When the full roll has been urged upwardly a sufficient distance onto the upper spigot to clear the lower spigot the full roll is then oriented into alignment with the two spigots and lowered onto the lower spigot so that the bearing on the lower spigot engages the reel. With a heavy roll this is also a cumbersome and a relatively difficult task.

European Specification No. EP-A-0,426,308 of Haugstad discloses a round bale wrapper which comprises a holder for holding a roll of plastics wrapping film material for dispensing onto a bale for wrapping thereof, as the bale is being rotated simultaneously about horizontal and vertical axes. An upper support arm of the holder which supports an upper spigot is pivotally mounted on an upstanding support of the holder, and is pivotal between a retained position with the upper spigot co-operating with a lower spigot for engaging a roll therebetween, and a release position for facilitating removal of a spent roll.

There is therefore a need for a holder for holding a roll of film material on a bale wrapper which overcomes the problems of known holders.

The present invention is directed towards providing such a holder for a roll of film material, and the invention is also directed towards providing a bale wrapper comprising such a holder.

According to the invention there is provided a holder for a bale wrapper for supporting a roll of wrapping film material, and for facilitating rotation of the roll for dispensing the film material therefrom to a bale of material located on the bale wrapper for wrapping the bale, the holder comprising a support means for mounting on the bale wrapper, a first engaging means carried on the support means for engaging the roll at one of two axially opposite ends, and a second engaging means carried on the support means, the second engaging means being axially spaced apart from the first engaging means for engaging the roll at the other of the two axially opposite ends and defining with the first engaging means a roll axis, the second engaging means being moveable between an engaged position engaging the roll and retaining the roll between the first engaging means and the second engaging means for facilitating dispensing of the film material therefrom, and a cocked position for facilitating removal of a roll from the holder, wherein a retaining means is provided for releaseably retaining the second engaging means in the cocked position for facilitating removal and replacement of the roll, and an urging means is provided for urging the retaining means into a retaining position for engaging the second engaging means as the second engaging means reaches the cocked position.

Advantageously, a release means is provided for releasing the retaining means from the retaining position for in turn releasing the second engaging means from the cocked position. Preferably, the release means is located to be readily accessible to a person replacing a roll in the holder. Ideally, the release means comprises a pull cord connected to the retaining means for urging the retaining means against the urging means from the retaining position.

Preferably, the first and second engaging means are carried on the support means with the second engaging means located axially above the first engaging means, so that the second engaging means is moveable into the cocked position by manually urging a reel of a spent roll of film material upwardly against the second engaging means for urging the second engaging means upwardly into the cocked position, and for facilitating subsequent disengagement of the first engaging means by the reel of the spent roll so that the reel of the spent roll is manually urgeable out of alignment with the first and second engaging means for initially disengaging the first engaging means, and then disengaging the second engaging means as the reel is manually lowered from the second engaging means. Advantageously, the first and second engaging means are located on the support means so that with the second engaging means in the cocked position a new roll of film material is manually engageable on the first engaging means and subsequently manually orientable into alignment with the first and second engaging means so that by releasing the retaining means from the retaining position the second engaging means is urgeable from the cocked position into the engaged position for retaining the roll of film material between the first and second engaging means.

In one embodiment of the invention a biasing means is provided for urging the second engaging means axially from the cocked position to the engaged position, and for retaining the roll between the first and second engaging means.

In another embodiment of the invention the first engaging means comprises a first spigot, and the second engaging means comprises a second spigot, the respective spigots being axially aligned with each other.

In a further embodiment of the invention the second spigot is axially slidable between the engaged position and the cocked position.

In one embodiment of the invention the retaining means co-operates with the second spigot for releaseably retaining the second spigot in the cocked position. Advantageously, the retaining means comprises a retaining pin which is engageable with an engagement recess on the second spigot for retaining the second spigot in the cocked position. Preferably, the engagement recess is provided by an engagement groove extending circumferentially around the second spigot.

In one embodiment of the invention a main sleeve extending from the support means in a direction axially relative to the first and second spigots slidably carries the second spigot so that the second spigot is slidable between the engaged and cocked positions, and a secondary sleeve extending radially from the main sleeve slidably carries the retaining pin, the retaining pin being slidable in the secondary sleeve into and out of the retaining position.

In another embodiment of the invention the support means comprises an upstanding support member and sidewardly extending spaced apart lower and upper support arms for supporting the first and second engaging means, respectively, the second engaging means being slidably supported in the upper support arm.

In a further embodiment of the invention a carrier means is supported on the support means for carrying a plurality of first engaging means spaced apart from each other, each first engaging means being adapted to support a roll of film material, and the carrier means being movably mounted on the support means for sequentially aligning the respective first engaging means with the second engaging means for in turn sequentially bringing the rolls on the first engaging means into alignment with the second engaging means.

Preferably, the carrier means is rotatably mounted on the support means about a rotational axis parallel to and spaced apart from the roll axis defined by the second engaging means, the respective first engaging means being located on a pitch circle co-axial with the rotational axis of the carrier means.

Ideally, the carrier means is pivotal between a loading position for facilitating loading of the rolls of film material onto the respective first engaging means and an operable position for facilitating sequential alignment of the respective first engaging means with the second engaging means.

Advantageously, the carrier means comprises a circular carrier plate which defines the rotational axis.

In another embodiment of the invention the biasing means comprises a main compression spring.

In a further embodiment of the invention the urging means comprises a secondary compression spring for urging the retaining means into the retaining position.

In a further embodiment of the invention the respective first and second engaging means rotatably carry first and second bearings, respectively, for engaging a reel of the roll of film material for facilitating rotation thereof.

In a still further embodiment of the invention a tensioning means is provided for tensioning the film material as the film material is being unwound from the roll.

Additionally, the invention provides a bale wrapper comprising a means for rotating a bale to be wrapped about at least one axis, and a holder according to the invention for supporting a roll of wrapping film material located for dispensing the film material to the bale so that on rotation of the bale film material is drawn from the roll and wrapped around the bale.

In one embodiment of the invention the means for rotating the bale rotates the bale about a pair of axes disposed substantially perpendicularly to each other.

Alternatively, the holder is mounted on the bale wrapper for facilitating revolving the holder and in turn the roll of film material about the bale on the bale wrapper.

The advantages of the invention are many. A particularly important advantage of the invention is that it facilitates ready and easy replacement of a spent roll with a full roll of material. By virtue of the fact that the second engaging means can be urged into the cocked position by hand with the empty reel of a spent roll, and retained in the cocked position by the retaining means, the holder is cocked and ready for receiving the next full roll. Therefore, little effort is required for urging the second engaging means into the cocked position, since, in general, the empty reel will be relatively light. Therefore, the only effort which is required for urging the second engaging means into the cocked position is that which is necessary to urge the second engaging means against the action of the biasing means. Furthermore, and most importantly, since the second engaging means will already be in the cocked position after the spent roll has been removed, the full roll can readily easily be secured in the holder without the need for having to urge the second engaging means into a position which allows the full roll to be engaged on the first engaging means. Rather, the full roll can be placed on the lower first engaging means and then oriented into alignment with the second engaging means which can then readily easily be released into the engaged position with the full roll secured between the first and second engaging means. Thus, the need for urging a heavy full roll of film material upwardly for in turn simultaneously urging the second engaging means upwardly against its spring urging force in order to align the full roll with the lower first engaging means has been eliminated. Thus, little manual effort is required in replacing a spent roll with a full roll.

Another advantage of the invention is achieved by providing the holder with a carrier means for carrying a plurality of full rolls on the respective plurality of first engaging means, in that should a roll become spent, all that is required is to remove the reel of the spent roll, and while removing the spent reel urge the second engaging means into the cocked position. The carrier means is then moved for aligning the next full roll with the second engaging means, and the second engaging means is released from the cocked position to the engaged position for securing the new full roll between its first engaging means and the second engaging means.

The invention will be more clearly understood from the following description of some preferred embodiments thereof which are given by way of example only with reference to the accompanying drawings, in which:
Fig. 1 is a perspective view of a bale wrapper according to the invention,
Fig. 2 is another perspective view of the bale wrapper of Fig. 1,
Fig 3 is a side elevational view of a holder according to the invention of the bale wrapper of Fig. 1 for holding a roll of film material,
Fig. 4 is an enlarged side elevational view of a portion of the holder of Fig. 3 illustrating a part of the holder in section,
Fig. 5 is a view similar to Fig. 4 illustrating the portion of the holder in a different position,
Figs. 6 (a) to (d) are side elevational views of the holder of Fig. 4 illustrated in use,
Fig. 7 is a side elevational view of a holder according to another embodiment of the invention,
Fig. 8 is a diagrammatic plan view of a bale wrapper with the holder of Fig. 7 mounted thereon,
Fig. 9 is a plan view of the holder of Fig. 7,
Fig. 10 is a side elevational view of the holder of Fig. 7 illustrating a part of the holder in a different position,
Fig. 11 is a side elevational view of a holder according to a further embodiment of the invention, and
Fig. 12 is a side elevational view of the holder of Fig. 11 illustrating parts of the holder of Fig. 11 in different positions.

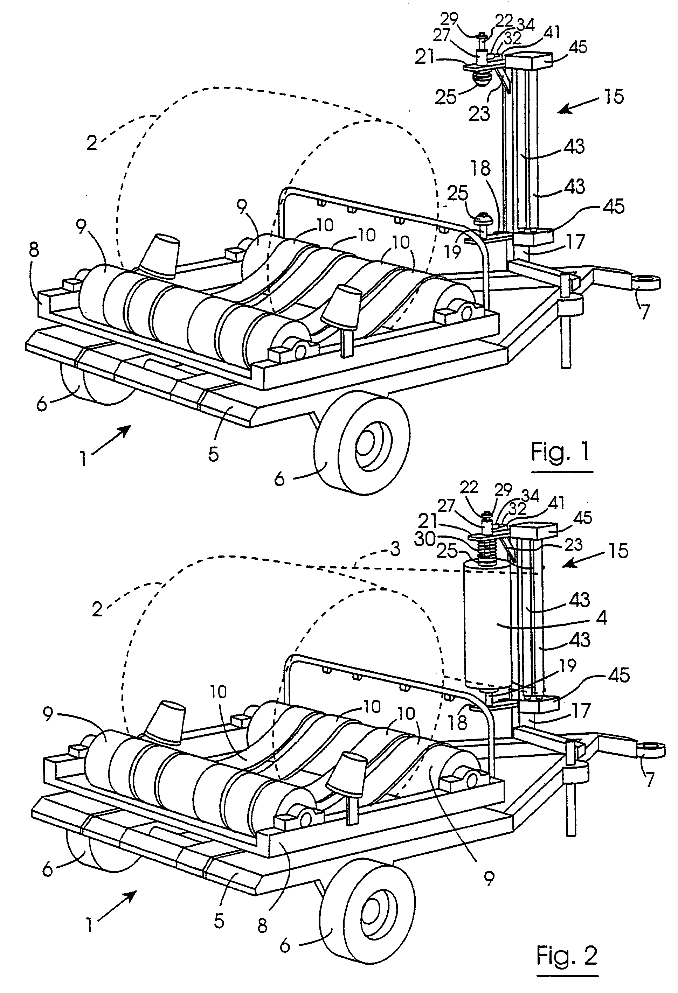

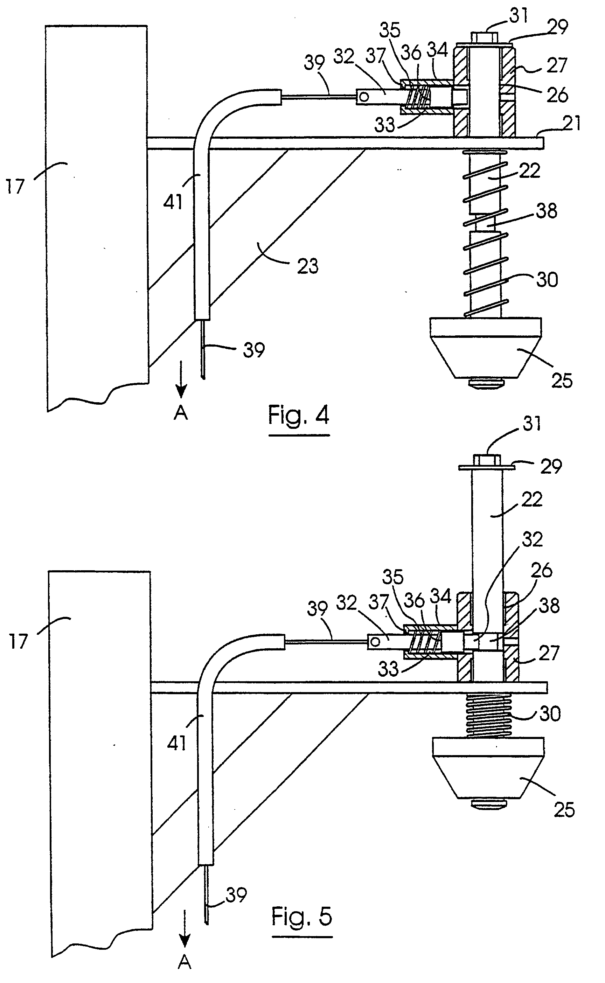

Referring to the drawings and initially to Figs. 1 to 6 thereof, there is illustrated a bale wrapper according to the invention indicated generally by the reference numeral 1. The bale wrapper 1 is suitable for wrapping relatively large round bales 2 of silage with plastics film wrapping material 3 from a roll 4 of the film material. Such bale wrappers 1 will be well known to those skilled in the art, and it is not intended to describe the bale wrapper in significant detail. Rather, reference is made to PCT Specification No. WO 94/06272 which contains a description of such a bale wrapper. Briefly, the bale wrapper 1 comprises a main framework 5 which is carried on a pair of ground engaging wheels 6. A hitch 7 extending from the main framework 5 is provided for coupling the bale wrapper 1 to a tractor or other suitable towing vehicle for trailing thereof. A bale support means comprising a rotatable table 8 is rotatably carried on the main framework 5, and in turn carries a pair of spaced apart rollers 9 which carry endless bale receiving drive belts 10. A drive motor and transmission (not shown) simultaneously rotates the table 8 about a vertical axis and the rollers 9 about respective horizontal axes which in turn drive the belts 10 for simultaneously rotating the bale 2 about respective vertical and horizontal axes for facilitating wrapping of the bale with the film material. Bale wrappers of this type will be well known to those skilled in the art.

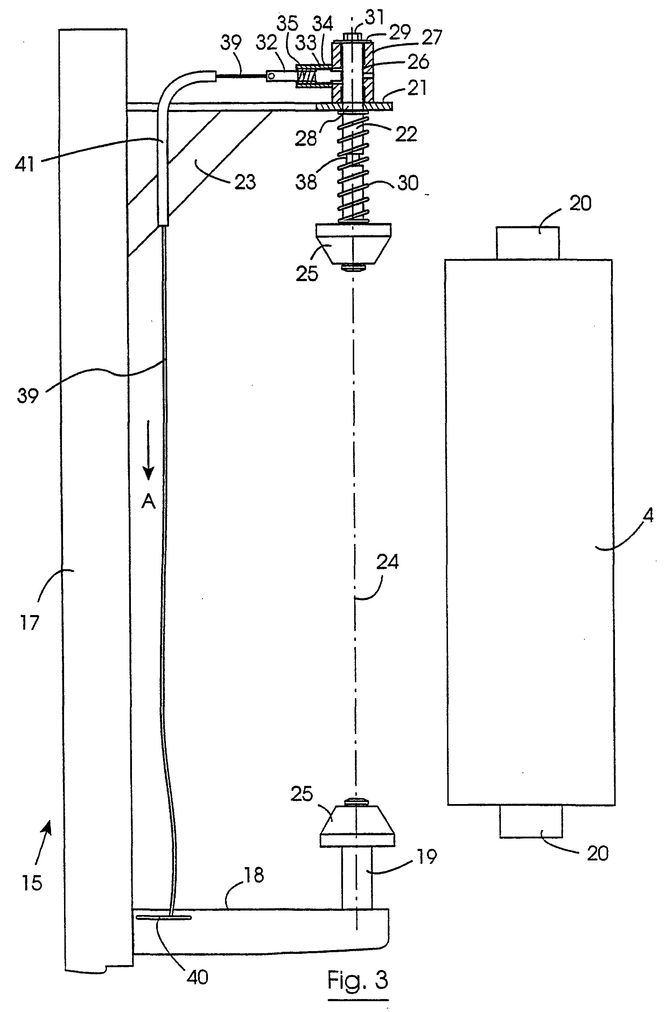

Referring in particular to Figs. 3 to 6, a holder also according to the invention and indicated generally by the reference numeral 15 is illustrated, and supports the roll 4 of film material 3 for dispensing of the film material 3 to the bale 2 for wrapping thereof. The holder 15 comprises support means, namely, an upstanding support member 17 of box section steel which is welded to and extends upwardly from the main framework 5 towards the front thereof. A lower support arm 18 extending sidewardly from the support member 17 supports a first engaging means, namely, a first spigot 19 for engaging a lower end of a central bore (not shown) of a reel 20 of the roll 4. An upper support arm 21 extending sidewardly from the support member 17 supports a second engaging means, namely, a second spigot 22 for engaging the central bore (not shown) at an axially opposite upper end of the reel 20 of the roll 4. A gusset plate 23 extending between the support member 17 and the upper support arm 21 reinforces the upper support arm 21. The first and second spigots 19 and 20, respectively, are axially aligned with each other and define a main axis 24 which coincides with the roll axis, and about which the roll 4 is rotatable. The first and second spigots 19 and 22 each rotatably carry frusto-conical bearings 25 for engaging the central bore (not shown) of the reel 20 of the roll 4 for facilitating rotation of the roll 4 about the main axis 24 for dispensing film material therefrom.

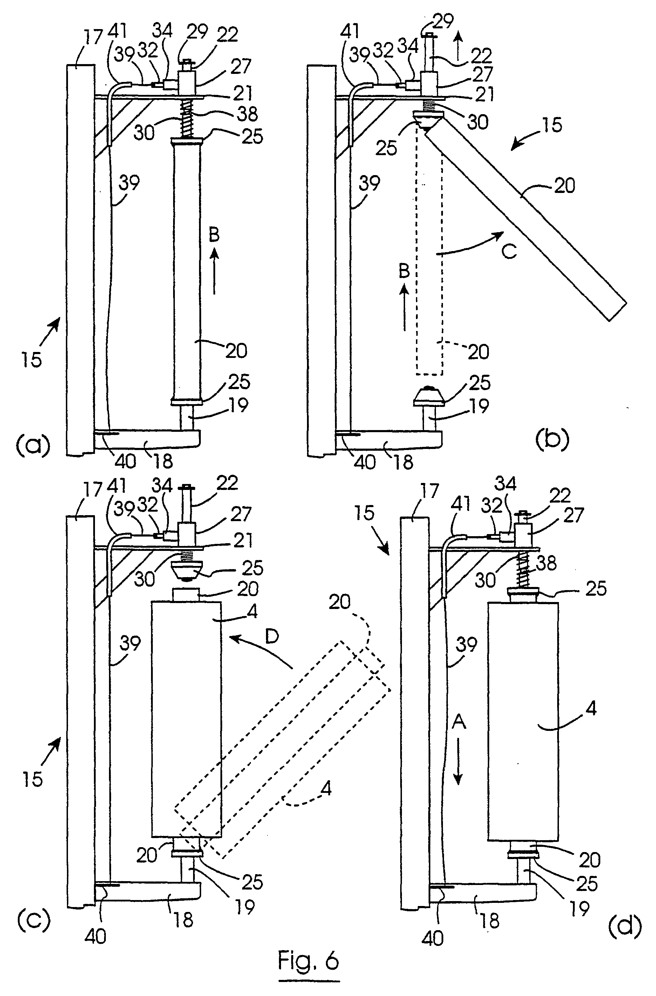

The first spigot 19 is rigidly mounted on the lower support arm 18. The second spigot 22 is vertically and axially slidable in a bore 26 of a main sleeve 27, which extends upwardly from the upper support arm 21. The second spigot 22 is slidable in the main sleeve 27 between an engaged position illustrated in Figs. 6(a) and 6(d) with the roll 4 engaged between the first and second spigots 19 and 22 and secured in the holder 15, and a cocked position illustrated in Figs. 6(b) and 6(c) for facilitating removal and replacement of a spent roll 4 with a full roll 4. An opening 28 in the upper support arm 21 accommodates the second spigot 22 into the main sleeve 27. A biasing means, namely, a main compression spring 30, which is carried on the second spigot 22 acts between the upper support arm 21 and the bearing 25 for urging the second spigot 22 downwardly in a direction towards the first spigot 19 for engaging and securing the roll 4 in the holder 15 between the first and second spigots 19 and 22. A stop plate 29 secured at a top end of the second spigot 22 by a bolt 31 engages the main sleeve 27 for retaining the second spigot 22 in the main sleeve 27 against the urging action of the main compression spring 30.

A retaining means for releaseably retaining the second spigot 22 in the cocked position comprises a retaining pin 32 which is slidably carried in a bore 33 of a secondary sleeve 34 extending transversely from the main sleeve 27. An urging means, namely, a secondary compression spring 35 located in the bore 33 of the secondary sleeve 34 urges the retaining pin 32 into a retaining position for engaging an engagement groove 38, which extends circumferentially around the second spigot 22 when the second spigot 22 is urged upwardly into the cocked position, and for releaseably retaining the second spigot 22 in the cocked position. The secondary spring 35 acts between a shoulder 36 of the retaining pin 32 and a flange 37 extending radially inwardly at a distal end of the secondary sleeve 34. A release means, namely, a pull cord 39 is connected to the retaining pin 32 for urging the retaining pin 32 from the retaining position for in turn disengaging the engagement groove 38 for releasing the second spigot 22 from the cocked position to move downwardly under the action of the main spring 30 into the engaged position in engagement with the roll 4. A guide tube 41 secured to the upper support arm 21 guides the pull cord 39 from the retaining pin 32 to an anchor bracket 40 mounted on the lower carrier arm 18, so that the pull cord 39 may be pulled in the direction of the arrow A for releasing the retaining pin 32 from the engagement groove 38.

Tensioning rollers 43 for tensioning the film material 3 from the roll 4 are rotatably mounted on mounting brackets 45 which extend sidewardly from the upstanding support member 17. An appropriate tensioning mechanism (not shown) for controlling the tension induced in the film material 3 by the tensioning rollers 43 is located in one of the mounting brackets 45. The provision of such tensioning rollers for tensioning film material in bale wrappers will be well known to those skilled in the art.

In use, to replace a spent roll 4 with a new roll 4, the reel 20 of the spent roll 4 is manually urged upwardly in the direction of the arrow B (see Fig. 6(a)) against the bearing 25 of the second spigot 22 for urging the second spigot 22 upwardly in the main sleeve 27 against the main spring 30. The reel 20 is manually urged upwardly until the engagement groove 38 of the second spigot 22 is aligned with the retaining pin 32, at which stage the secondary spring 35 urges the retaining pin 32 into engagement with the engagement groove 38 for thus retaining the second spigot 22 in the cocked position. When the second spigot 22 is in the cocked position (see Fig. 6(b)) the spacing between the respective bearings 25 of the first and second spigots 19 and 22 is such as to facilitate pivoting of the reel 20 of the spent roll 4 about the bearing 25 of the second spigot 22 in the direction of the arrow C for urging the reel 20 out of alignment with the first and second spigots 19 and 22. Once the reel 20 has been urged sufficiently out of alignment to clear the bearing 25 of the first spigot 19 the reel 20 can then be disengaged from the bearing 25 of the second spigot 22 and removed.

To secure a new roll 4 in the holder 2, the reel 20 of the roll 4 is initially engaged with the bearing 25 of the first spigot 19 (see the illustration of the roll 4 in broken lines in Fig. 6(c)), and the roll 4 is pivoted about the bearing 25 of the first spigot 19 in the direction of the arrow D into alignment with the first and second spigots 19 and 22, see the roll 4 illustrated in full lines in Fig. 6(c). Once the new roll 4 is in alignment with the first and second spigots 19 and 22, the pull cord 39 is pulled in the direction of the arrow A for releasing the retaining pin 32 for in turn releasing the second spindle 22 from the cocked position into the engaged position for engaging the reel 20 of the new roll 4, and for securing the roll 4 between the first and second spigots 19 and 20, see Fig. 6(d). Since the bearings 25 are rotatably carried on the first and second spigots 19 and 22 the secured new roll 4 is thus likewise rotatable on the spigots 19 and 22. The film material is then threaded through the tensioning rollers 43 and fed on the bale 2 in the conventional fashion.

Accordingly, provided each time a reel 20 of a spent roll 4 is removed from the holder 15 the second spigot 22 is urged into the cocked position and retained by the retaining pin 32, the next full roll can readily easily be engaged between the first and second spigots 19 and 22 as already described by merely engaging the reel 20 of the full roll 4 on the bearing 25 of the first spigot 19, aligning the new roll 4 with the first and second spigots 19 and 22 and releasing the retaining pin 32 by pulling the pull cord 39.

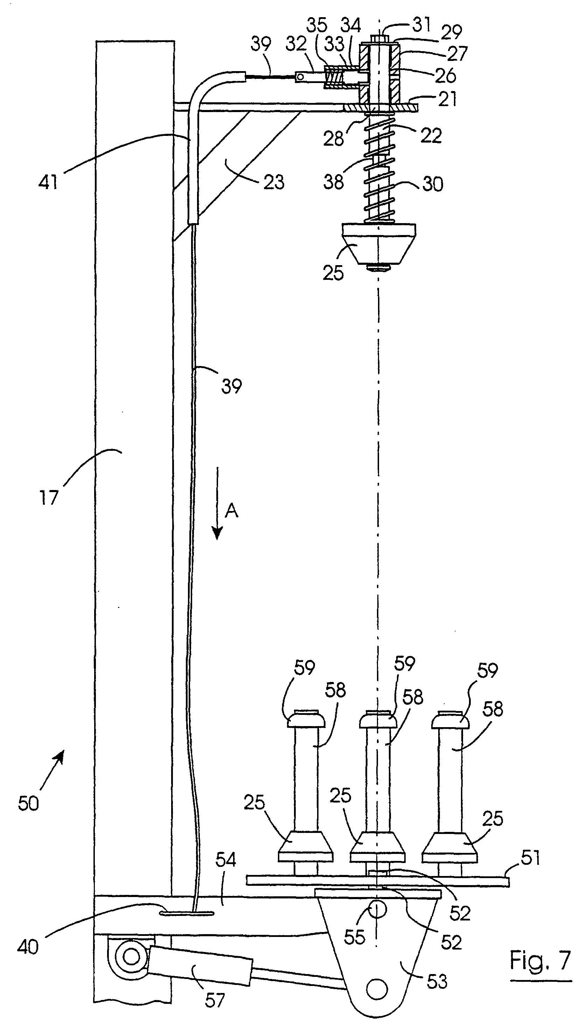

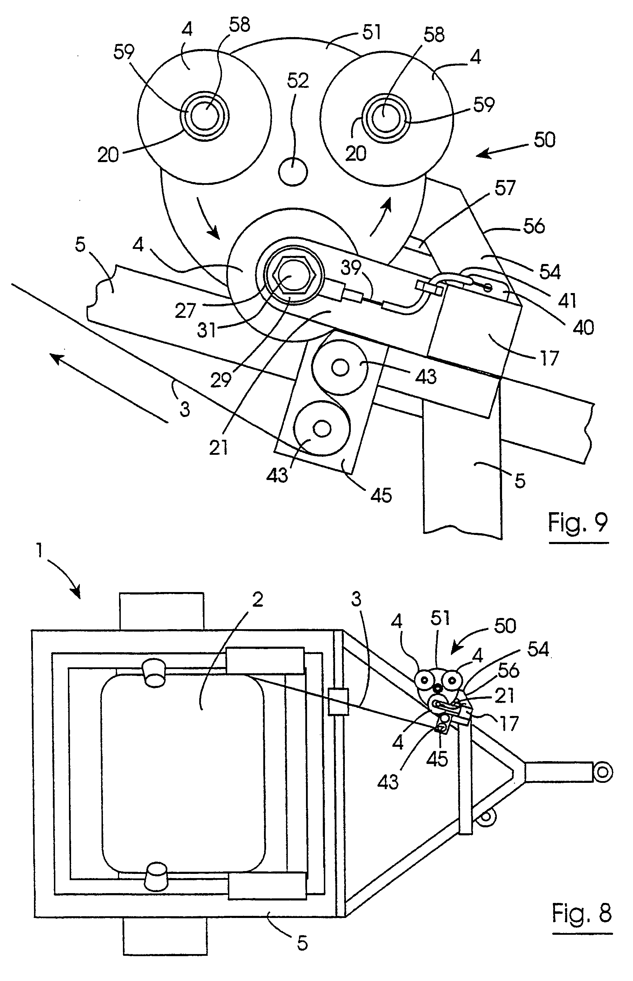

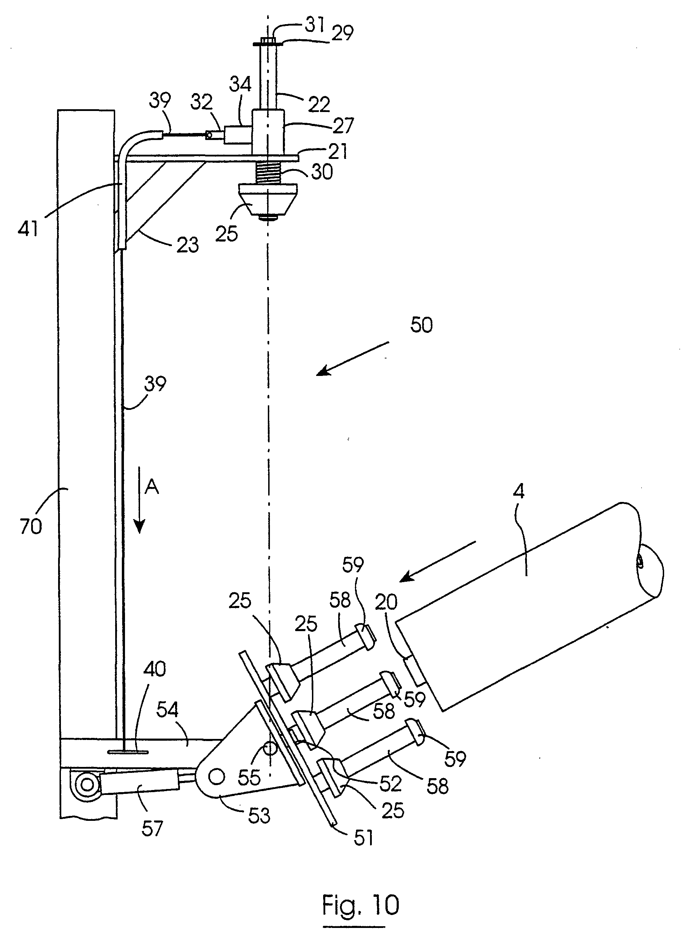

Referring now to Figs. 7 to 10, there is illustrated a holder according to another embodiment of the invention which is indicated generally by the reference numeral 50, which is also suitable for mounting on a bale wrapper similar to the bale wrapper 1. The holder 50 is illustrated schematically in Fig. 8 mounted on a bale wrapper 1. The holder 50 in this embodiment of the invention is substantially similar to the holder 15, and similar components are identified by the same reference numerals. The main difference between the holder 50 and the holder 15 is that the holder 50 is provided with a carrier means, namely, a circular carrier plate 51 for carrying three rolls 4 of film material 3. The carrier plate 51 is rotably carried on a spindle 52, which in turn extends from a pivotal carrier bracket 53 which is pivotally carried on a lower support arm 54. The lower support arm 54 extends sidewardly from the support member 17. A pivot shaft 55 which is carried on the lower support shaft 54 pivotally carries the carrier bracket 53 for facilitating pivoting of the carrier plate 51 between an operable position illustrated in Fig. 7 and a loading position illustrated in Fig. 10 for facilitating loading of the three rolls 4 onto the carrier plate 51 as will be described below. A pivoting means, namely, an hydraulic ram 57 acting between the lower support arm 54 and the carrier bracket 53 pivots the carrier bracket 53 and in turn the carrier plate 51 between the operable and loading positions. The spindle 52 defines the rotational axis of the carrier plate 51, which is spaced apart from and parallel to the main axis 24 when the carrier plate 51 is in the operable position.

In this embodiment of the invention the carrier plate 51 carries three first engaging means, namely, three first spigots 58 for carrying the three rolls 4. The first spigots 58 are equi-spaced circumferentially around the spindle 2 on a pitch circle, the centre of which coincides with the rotational axis of the carrier plate 51, and the locus of the pitch circle passes beneath the second spigot 22 so that by rotating the carrier plate 51 about the spindle 52 the respective first spigots 58 are sequentially brought into alignment with the second spigot 22.

The first spigots 58 extend upwardly beyond the rotatable bearings 25 for engaging bores (not shown) in reels 20 of the respective rolls 4 for supporting the rolls 4 on the first spigots 58 until the first spigots 58 are brought into alignment with the second spigot 22 and the rolls 4 are secured between the first and second spigots. Stabilising flanges 59 extend around the first spigots 58 adjacent their distal ends for engaging the bores (not shown) of the reels 20 of the rolls 4 for retaining the rolls 4 stabily axially aligned with the first spigots 58 until the respective first spigots 58 are brought into alignment with the second spigot 22.

The lower support arm 54 is cranked at 56 so that the rotational axis of the carrier plate 51 about the spindle 52 is offset from the main axis 24 defined by the second spigot 22 a distance equal to the radius of the pitch circle along which the first spigots 58 are located.

In use, operation of the holder 50 is substantially similar to the operation of the holder 15. Initially the carrier plate 51 is pivoted into the loading position illustrated in Fig. 10 and three rolls 4 are engaged on the respective first spigots 58. The carrier plate 51 is pivoted into the operable position illustrated in Fig. 7. The second spigot 22 should be in the cocked position as a result of the previous removal of a spent roll from the holder 50. The carrier plate 51 is then rotated about the spindle 52 until one of the rolls 4 and its corresponding first spigot 58 are in axial alignment with the second spigot 22, which is then released from the cocked position to the engaged position in a manner already described, and the roll is then secured between the first and second spigots 58 and 22. When that roll 4 becomes spent the reel is removed as already described with reference to the holder of Figs. 1 to 6, and during removal of the reel of the spent roll the second spigot 22 is urged into and retained in the cocked position. The carrier plate 51 is then rotated about the spindle 52 until the next full roll on one of the spigots 58 is in alignment with the second spigot 22, and the second spigot 22 is then released from its cocked position into its engaged position for securing the new full roll between its first spigot 58 and the second spigot 22. Otherwise, operation of the holder 50 is similar to that of the holder 15.

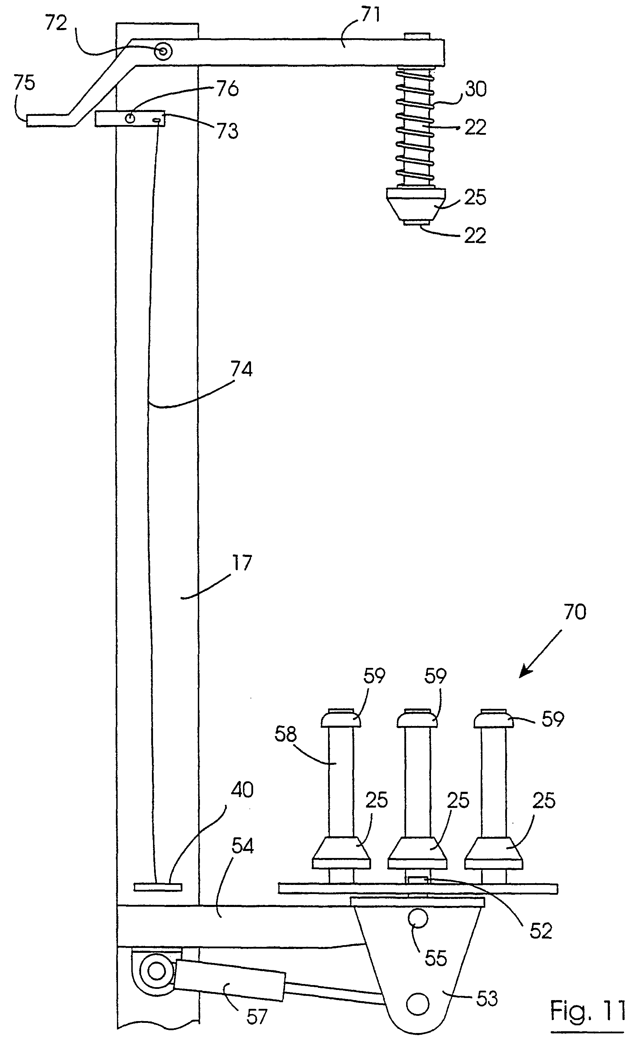

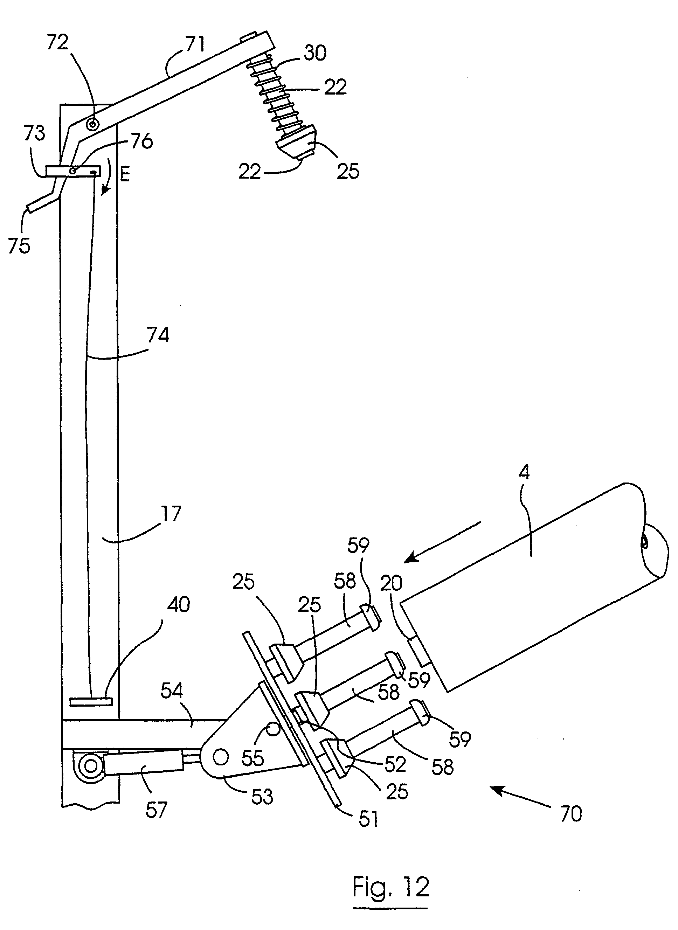

Referring now to Figs. 11 and 12 there is illustrated a holder 70 according to another embodiment of the invention which is substantially similar to the holder 50, and similar components are identified by the same reference numerals. The holder 70 is also suitable for carrying three rolls on a carrier plate 51 which is similar to the carrier plate 51 of the holder 50. The main difference between the holder 70 and the holder 50 is that the holder 70 is provided with an upper support arm 71 which is pivotally connected to the upstanding support member 17 about a pivot pin 72, and is thus pivotal between an engaged position with the second spigot 22 in the engaged position, see Fig. 11, and a cocked position with the second spigot 22 in the cocked position, see Fig. 12. A torsion spring (not shown) about the pivot pin 72 which acts between the support member 17 and the upper support arm 71 acts to urge the upper support arm 71 into the engaged position. A retaining means, namely, a retaining catch 73 pivotally mounted on the support member 17 about a pivot pin 76 retains the upper support arm 71 in the cocked position. A release means, namely, a pull cord 74 is provided for pivoting the retaining catch 73 in the direction of the arrow E for in turn releasing the upper support arm 71 from the cocked to the engaged position. Additionally, in this embodiment of the invention the bearing 25 is slidable on the second spigot 22 for accommodating variation in roll and reel lengths. The main compression spring 30 acting against the upper support arm 71 urges the bearing 25 into engagement with the reel 20 of the roll 4.

Operation of the holder 70 is substantially similar to the holder 50, with the exception that instead of urging the second spigot 22 only into the cocked position, the second spigot 22 and the upper arm 71 are urged together into the cocked position as a reel of a spent roll is being removed. When the next full roll has been brought into alignment with the second spigot 22 the retaining catch 73 is released by the pull cord 74 which in turn releases the upper support arm 71 which pivots from the cocked position into the engaged position thereby urging the second spigot 22 into the engaged position for engaging the new full roll 4 between the corresponding first spigot 58 and the second spigot 22. Otherwise, operation of the holder 70 is similar to that of the holder 50.

It is envisaged that a handle may be provided extending from the upper support arm 71 at 75, which could be used for manually pivoting the upper support arm 71 from the engaged position to the cocked position.

While the holder has been described for use with a bale wrapper of the type which is particularly suitable for wrapping round bales, it will be readily apparent that the holder may be used in conjunction with any other bale wrapper. In the event that the holder is used in conjunction with a bale wrapper of the type in which the holder is mounted to revolve around the bale, the holder would be mounted on a carrier which would be adapted for revolving the holder around the bale. This, would typically, be in the case of a bale wrapper for wrapping square or rectangular bales.

## Claims

1. A holder for a bale wrapper (1) for supporting a roll (4) of wrapping film material (3), and for facilitating rotation of the roll (4) for dispensing the film material therefrom to a bale (2) of material located on the bale wrapper (1) for wrapping the bale, the holder (15,50,70) comprising a support means (17) for mounting on the bale wrapper (1), a first engaging means (19,58) carried on the support means (17) for engaging the roll at one of two axially opposite ends, and a second engaging means (22) carried on the support means (17), the second engaging means (22) being axially spaced apart from the first engaging means (19,58) for engaging the roll at the other of the two axially opposite ends and defining with the first engaging means (19,58) a roll axis (24), the second engaging means (22) being moveable between an engaged position engaging the roll and retaining the roll between the first engaging means (19,58) and the second engaging means (22) for facilitating dispensing of the film material therefrom, and a cocked position for facilitating removal of a roll from the holder (15,50,70), **characterised in that** a retaining means (32,73) is provided for releaseably retaining the second engaging means (22) in the cocked position for facilitating removal and replacement of the roll, and an urging means (35) is provided for urging the retaining means (32,73) into a retaining position for engaging the second engaging means (22) as the second engaging means (22) reaches the cocked position.

2. A holder as claimed in Claim 1 **characterised in that** a release means (39,74) is provided for releasing the retaining means (32,73) from the retaining position for in turn releasing the second engaging means (22) from the cocked position.

3. A holder as claimed in Claim 2 **characterised in that** the release means (39,74) is located to be readily accessible to a person replacing a roll in the holder (15,50,70).

4. A holder as claimed in Claim 2 or 3 **characterised in that** the release means (39,74) comprises a pull cord (39,74) connected to the retaining means (32,73) for urging the retaining means (32,73) against the urging means (35) from the retaining position.

5. A holder as claimed in any preceding claim **characterised in that** the first and second engaging means (19,58,22) are carried on the support means (17) with the second engaging means (22) located axially above the first engaging means (19,58), so that the second engaging means (22) is moveable into the cocked position by manually urging a reel (20) of a spent roll (4) of film material upwardly against the second engaging means (22) for urging the second engaging means (22) upwardly into the cocked position, and for facilitating subsequent disengagement of the first engaging means (19,58) by the reel (20) of the spent roll so that the reel of the spent roll is manually urgeable out of alignment with the first and second engaging means (19,58,22) for initially disengaging the first engaging means (19,58), and then is disengageable from the second engaging means (22) as the reel is manually lowered from the second engaging means (22).

6. A holder as claimed in Claim 5 **characterised in that** the first and second engaging means (19,58,22) are located on the support means (17) so that with the second engaging means (22) in the cocked position a new roll of film material is manually engageable on the first engaging means (19,58) and subsequently manually orientable into alignment with the first and second engaging means (19,58,22) so that by releasing the retaining means (32,73) from the retaining position the second engaging means (22) is urgeable from the cocked position into the engaged position for retaining the roll of film material between the first and second engaging means (19,58,22).

7. A holder as claimed in any preceding claim **characterised in that** a biasing means (30) is provided for urging the second engaging means (22) axially from the cocked position to the engaged position, and for retaining the roll between the first and second engaging means (19,58,22).

8. A holder as claimed in Claim 7 **characterised in that** the biasing means (30) comprises a main compression spring (30).

9. A holder as claimed in any preceding claim **characterised in that** the first engaging means (19,58) comprises a first spigot (19,58), and the second engaging means (22) comprises a second spigot (22), the respective spigots being axially aligned with each other, and the second spigot (22) being axially slidable between the engaged position and the cocked position.

10. A holder as claimed in Claim 9 **characterised in that** the retaining means (32) co-operates with the second spigot (22) for releaseably retaining the second spigot (22) in the cocked position.

11. A holder as claimed in Claim 9 or 10 **characterised in that** the retaining means (32) comprises a retaining pin (32) which is engageable with an engagement recess (38) on the second spigot (22) for retaining the second spigot (22) in the cocked position.

12. A holder as claimed in Claim 11 **characterised in that** the engagement recess (38) is provided by an engagement groove (38) extending circumferentially around the second spigot (22), and a main sleeve (27) extending from the support means (17,21) in a direction axially relative to the first and second spigots (19,58,22) slidably carries the second spigot (22) so that the second spigot (22) is slidable between the engaged and cocked positions, and a secondary sleeve (34) extending radially from the main sleeve (27) slidably carries the retaining pin (32), the retaining pin (32) being slidable in the secondary sleeve (34) into and out of the retaining position.

13. A holder as claimed in any preceding claim **characterised in that** the support means (17) comprises an upstanding support member (17) and sidewardly extending spaced apart lower and upper support arms (18,54,21,71) for supporting the first and second engaging means (19,58,22), respectively, the second engaging means (22) being slidably supported in the upper support arm (21).

14. A holder as claimed in any preceding claim **characterised in that** a carrier means (51) is supported on the support means (17) for carrying a plurality of first engaging means (58) spaced apart from each other, each first engaging means (58) being adapted to support a roll (4) of film material (3), and the carrier means (51) being movably mounted on the support means (17) for sequentially aligning the respective first engaging means (58) with the second engaging means (22) for in turn sequentially bringing the rolls (4) on the first engaging means (58) into alignment with the second engaging means (22).

15. A holder as claimed in Claim 14 **characterised in that** the carrier means (51) is rotatably mounted on the support means (17) about a rotational axis parallel to and spaced apart from the roll axis defined by the second engaging means (22), the respective first engaging means (58) being located on a pitch circle co-axial with the rotational axis of the carrier means (51).

16. A holder as claimed in Claim 14 or 15 **characterised in that** the carrier means (51) is pivotal between a loading position for facilitating loading of the rolls of film material onto the respective first engaging means (58) and an operable position for facilitating sequential alignment of the respective first engaging means (58) with the second engaging means (22).

17. A holder as claimed in any preceding claim **characterised in that** the urging means (35) comprises a secondary compression spring (35) for urging the retaining means (32) into the retaining position

18. A bale wrapper comprising a means (8,9) for rotating a bale to be wrapped about at least one axis, and a holder (15,50,70) as claimed in any preceding claim for supporting a roll (4) of wrapping film material (3) located for dispensing the film material to the bale (2) so that on rotation of the bale film material is drawn from the roll and wrapped around the bale (2).

## Patentansprüche

1. Halterung für einen Ballenverpacker (1) zum Halten einer Rolle (4) Verpackungsfolie (3) und zum Erleichtern einer Drehung der Rolle (4), um von ihr die Folie auf einen Materialballen (2) abzuspulen, der zum Verpacken des Ballens auf dem Ballenverpacker (1) angeordnet ist, wobei die Halterung (15, 50, 70) umfasst: eine auf dem Ballenverpacker (1) zu montierende Halteeinrichtung (17), eine auf der Halteeinrichtung (17) angebrachte erste Aufnahmeeinrichtung (19, 58) zum Aufnehmen der Rolle an einem von zwei axial gegenüberliegenden Enden, und eine auf der Halteeinrichtung (17) angebrachte zweite Aufnahmeeinrichtung (22), wobei die zweite Aufnahmeeinrichtung (22) von der ersten Aufnahmeeinrichtung (19, 58) axial beabstandet ist, um die Rolle am anderen der beiden axial gegenüberliegenden Enden aufzunehmen und mit der ersten Aufnahmeeinrichtung (19, 58) eine Rollenachse (24) zu definieren, und wobei die zweite Aufnahmeeinrichtung (22) zwischen einer eingerückten Position, die die Rolle zwischen der ersten (19, 58) und zweiten Aufnahmeeinrichtung (22) zum Erleichtern des Abspulens der Folie von der Rolle aufnimmt und hält, und einer gespannten Position, die das Entfernen der Rolle aus der Halterung (15, 50, 70) ermöglicht, hin und her bewegt werden kann, **dadurch gekennzeichnet, dass** eine Arretiereinrichtung (32, 73) vorgesehen ist, um die zweite Aufnahmeeinrichtung (22) zum Entfernen und zum Austauschen der Rolle lösbar in gespannter Position zu halten, und dass eine Spanneinrichtung (35) vorgesehen ist, um die Arretiereinrichtung (32, 73) in eine Halteposition zu zwingen und so die zweite Aufnahmeeinrichtung (22) zu arretieren, sobald die zweite Aufnahmeeinrichtung (22) die gespannte Position erreicht.

2. Halterung nach Anspruch 1, **dadurch gekennzeichnet, dass** eine Freigabeeinrichtung (39, 74) vorgesehen ist, um die Arretiereinrichtung (32, 73) aus ihrer Halteposition und so wiederum die zweite Aufnahmeeinrichtung (22) aus der gespannten Position freizugeben.

3. Halterung nach Anspruch 2, **dadurch gekennzeichnet, dass** die Freigabeeinrichtung (39, 74) so angeordnet ist, dass sie leicht für eine Person zugänglich ist, die eine Rolle in der Halterung (15, 50, 70) auswechselt.

4. Halterung nach Anspruch 2 oder 3, **dadurch gekennzeichnet, dass** die Freigabeeinrichtung (39, 74) eine Zugleine (39, 74) umfasst, die mit der Arretiereinrichtung (32, 73) verbunden ist, um die Arretiereinrichtung (32, 73) aus ihrer Halteposition heraus gegen die Spanneinrichtung (35) zu drücken.

5. Halterung nach einem der vorherigen Ansprüche, **dadurch gekennzeichnet, dass** die erste und zweite Aufnahmeeinrichtung (19, 58, 22) auf der Halteeinrichtung (17) angebracht sind und die zweite Aufnahmeeinrichtung (22) axial oberhalb der ersten Aufnahmeeinrichtung (19, 58) angeordnet ist, sodass sich die zweite Aufnahmeeinrichtung (22) in die gespannte Position bewegen lässt, indem eine Spule (20) einer aufgebrauchten Folienrolle (4) manuell nach oben gegen die zweite Aufnahmeeinrichtung (22) gedrückt und so die zweite Aufnahmeeinrichtung (22) nach oben in die gespannte Position gezwungen wird, und dadurch die Spule (20) der aufgebrauchten Rolle von der ersten Aufnahmeeinrichtung (19, 58) gelöst werden kann, sodass sich die Spule der aufgebrauchten Rolle manuell aus ihrer Ausrichtung mit der ersten und zweiten Aufnahmeeinrichtung (19, 58, 22) bringen lässt, damit die Spule zunächst von der ersten Aufnahmeeinrichtung (19, 58) gelöst wird und dann, während sie manuell von der zweiten Aufnahmeeinrichtung (22) weg nach unten geführt wird, von der zweiten Aufnahmeeinrichtung (22) lösbar ist.

6. Halterung nach Anspruch 5, **dadurch gekennzeichnet, dass** die erste und zweite Aufnahmeeinrichtung (19, 58, 22) auf der Halteeinrichtung (17) angeordnet sind, sodass, wenn sich die zweite Aufnahmeeinrichtung (22) in gespannter Position befindet, sich eine neue Folienrolle in die erste Aufnahmeeinrichtung (19, 58) manuell einsetzen und anschließend mit der ersten und zweiten Aufnahmeeinrichtung (19, 58, 22) manuell ausrichten lässt, sodass durch Freigeben der Arretiereinrichtung (32, 73) aus der Halteposition die zweite Aufnahmeeinrichtung (22) aus der gespannten Position in die eingerückte Position gezwungen und so die Folienrolle zwischen der ersten und zweiten Aufnahmeeinrichtung (19, 58, 22) gehalten werden kann.

7. Halterung nach einem der vorherigen Ansprüche, **dadurch gekennzeichnet, dass** eine Vorspanneinrichtung (30) vorgesehen ist, um die zweite Aufnahmeeinrichtung (22) aus der gespannten Position axial in die eingerückte Position zu zwingen und dadurch die Rolle zwischen der ersten und zweiten Aufnahmeeinrichtung (19, 58, 22) zu halten.

8. Halterung nach Anspruch 7, **dadurch gekennzeichnet, dass** die Vorspanneinrichtung (30) eine Hauptdruckfeder (30) umfasst.

9. Halterung nach einem der vorherigen Ansprüche, **dadurch gekennzeichnet, dass** die erste Aufnahmeeinrichtung (19, 58) einen ersten Führungszapfen (19, 58), und die zweite Aufnahmeeinrichtung (22) einen zweiten Führungszapfen (22) umfasst, wobei die beiden Führungszapfen axial miteinander ausgerichtet sind und der zweite Führungszapfen (22) zwischen der eingerückten Position und der gespannten Position axial verschiebbar ist.

10. Halterung nach Anspruch 9, **dadurch gekennzeichnet, dass** die Arretiereinrichtung (32) mit dem zweiten Führungszapfen (22) in der Weise zusammenwirkt, dass der zweite Führungszapfen (22) lösbar in gespannter Position gehalten werden kann.

11. Halterung nach Anspruch 9 oder 10, **dadurch gekennzeichnet, dass** die Arretiereinrichtung (32) einen Haltestift (32) umfasst, der in eine Einrückaussparung (38) im zweiten Führungszapfen (22) eingerückbar ist, um den zweiten Führungszapfen (22) in gespannter Position zu halten.

12. Halterung nach Anspruch 11, **dadurch gekennzeichnet, dass** die Einrückaussparung (38) von einer kreisförmig um den zweiten Führungszapfen (22) verlaufenden Einrücknut (38) gebildet wird, und eine sich bezüglich des ersten und zweiten Führungszapfens (19, 58, 22) in axialer Richtung von der Halteeinrichtung (17, 21) wegerstreckende Haupthülse (27) den zweiten Führungszapfen (22) verschiebbar in sich aufnimmt, sodass der zweite Führungszapfen (22) zwischen der eingerückten Position und der gespannten Position verschiebbar ist, und dass eine sich in radialer Richtung von der Haupthülse (27) wegerstreckende sekundäre Hülse (34) den Haltestift (32) verschiebbar in sich aufnimmt, wobei sich der Haltestift (32) innerhalb der sekundären Hülse (34) in die Halteposition und aus ihr heraus schieben lässt.

13. Halterung nach einem der vorherigen Ansprüche, **dadurch gekennzeichnet, dass** die Halteeinrichtung (17) ein aufrecht stehendes Halteglied (17) umfasst, mit sich seitwärts erstreckenden und beabstandeten unteren und oberen Halterarmen (18, 54, 21, 71) zum Halten der ersten bzw. zweiten Aufnahmeeinrichtung (19, 58, 22), wobei die zweite Aufnahmeeinrichtung (22) im oberen Haltearm (21) verschiebbar gehalten wird.

14. Halterung nach einem der vorherigen Ansprüche, **dadurch gekennzeichnet, dass** auf der Halteeinrichtung (17) eine Trägereinrichtung (51) angebracht ist, die eine Vielzahl voneinander beabstandeter erster Aufnahmeeinrichtungen (58) trägt, wobei jede erste Aufnahmeeinrichtung (58) eine Rolle (4) mit Folienmaterial (3) aufnehmen kann und die Trägereinrichtung (51) beweglich auf der Halteeinrichtung (17) montiert ist, um die sequentielle Ausrichtung der jeweiligen ersten Aufnahmeeinrichtung (58) mit der zweiten Aufnahmeeinrichtung (22) und so wiederum die sequentielle Ausrichtung der Rollen (4) auf der ersten Aufnahmeeinrichtung (58) mit der zweiten Aufnahmeeinrichtung (22) zu ermöglichen.

15. Halterung nach Anspruch 14, **dadurch gekennzeichnet, dass** die Trägereinrichtung (51) auf der Halteeinrichtung (17) so montiert ist, dass die Trägereinrichtung (51) um eine Rotationsachse drehbar ist, die von der durch die zweite Aufnahmeeinrichtung (22) definierten Rollenachse parallel beabstandet ist, wobei die jeweilige erste Aufnahmeeinrichtung (58) auf einem zur Rotationsachse der Trägereinrichtung (51) koaxialen Teilkreis angeordnet ist.

16. Halterung nach Anspruch 14 oder 15, **dadurch gekennzeichnet, dass** sich die Trägereinrichtung (51) zwischen einer Ladestellung und einer Betriebsstellung hin und her schwenken lässt, wobei die Ladestellung zum Laden der Folienrollen auf die jeweilige erste Aufnahmeeinrichtung (58) und die Betriebsstellung zur sequentiellen Ausrichtung der jeweiligen ersten Aufnahmeeinrichtung (58) mit der zweiten Aufnahmeeinrichtung (22) dient.

17. Halterung nach einem der vorherigen Ansprüche, **dadurch gekennzeichnet, dass** die Spanneinrichtung (35) eine sekundäre Druckfeder (35) umfasst, um die Arretiereinrichtung (32) in die Halteposition zu zwingen.

18. Ballenverpacker mit einer Einrichtung (8, 9) zum Drehen eines zu verpackenden Ballens um mindestens eine Achse und einer Halterung (15, 50, 70) nach einem der vorherigen Ansprüche zum Halten einer Rolle (4) Verpackungsfolie (3), wobei die Folie bei der Drehung des Ballens von der Rolle gezogen, auf den Ballen (2) abgespult und dadurch um den Ballen (2) gewickelt wird.

## Revendications

1. Dispositif de support destiné à un dispositif d'enveloppement de balles (1) pour supporter un rouleau (4) de matériau de film d'enveloppement (3), et pour faciliter la rotation du rouleau (4) de manière à distribuer le matériau de film de celui-ci à une balle (2) de matériau située sur le dispositif d'enveloppement de balles (1) afin d'envelopper la balle, le dispositif de support (15, 50, 70) comprenant un moyen de support (17) pour un montage sur le dispositif d'enveloppement de balles (1), un premier moyen d'engagement (19, 58) supporté sur le moyen de support (17) pour engager le rouleau à l'une des deux extrémités axialement opposées, et un second moyen d'engagement (22) supporté sur le moyen de support (17), le second moyen d'engagement (22) étant axialement espacé du premier moyen d'engagement (19, 58) de manière à engager le rouleau à l'autre des deux extrémités axialement opposées et pour définir avec le premier moyen d'engagement (19, 58) un axe de rouleau (24), le second moyen d'engagement (22) étant mobile entre une position engagée et engageant le rouleau et retenant le rouleau entre le premier moyen d'engagement (19, 58) et le second moyen d'engagement (22) afin de faciliter la distribution du matériau de film à partir de celui-ci, et une position armée pour faciliter le retrait d'un rouleau du dispositif de support (15, 50, 70), **caractérisé en ce qu'**un moyen de retenue (32, 73) est prévu pour retenir, de façon amovible, le second moyen d'engagement (22) dans la position armée pour faciliter le retrait et le remplacement du rouleau, et un moyen de poussée (35) est prévu pour pousser le moyen de retenue (32, 73) dans une position de retenue afin d'engager le second moyen d'engagement (22) alors que le second moyen d'engagement (22) a atteint la position armée.

2. Dispositif de support selon la revendication 1, **caractérisé en ce qu'**un moyen de libération (39, 74) est prévu pour libérer le moyen de retenue (32, 73) de la position de retenue afin, qu'à son tour, il libère le second moyen d'engagement (22) de la position armée.

3. Dispositif de support selon la revendication 2, **caractérisé en ce que** le moyen de libération (39, 74) est situé pour être aisément accessible à une personne remplaçant un rouleau dans le dispositif de support (15, 50, 70).

4. Dispositif de support selon la revendication 2 ou 3, **caractérisé en ce que** le moyen de libération (39, 74) comprend un cordon à tirer (39, 74) raccordé au moyen de retenue (32, 73) pour pousser le moyen de retenue (32, 73) contre le moyen de poussée (35) de la position de retenue.

5. Dispositif de support selon l'une quelconque des revendications précédentes, **caractérisé en ce que** les premier et second moyens d'engagement (19, 58, 22) sont supportés sur le moyen de support (17) avec le second moyen d'engagement (22) situé axialement au-dessus du premier moyen d'engagement (19, 58), de telle sorte que le second moyen d'engagement (22) est mobile dans la position armée en poussant manuellement une bobine (20) d'un rouleau consommé (4) de matériau de film vers le haut à l'encontre du second moyen d'engagement (22) pour pousser le second moyen d'engagement (22) vers le haut dans la position armée, et pour faciliter le désengagement subséquent du premier moyen d'engagement (19, 58) par la bobine (20) du rouleau consommé, de telle sorte que la bobine du rouleau consommé peut être manuellement poussée en dehors de l'alignement avec les premier et second moyens d'engagement (19, 58, 22) afin de désengager initialement le premier moyen d'engagement (19, 58), puis être désengagée du second moyen d'engagement (22) alors que la roue est manuellement abaissée du second moyen d'engagement (22).

6. Dispositif de support selon la revendication 5, **caractérisé en ce que** les premier et second moyens d'engagement (19, 58, 22) sont situés sur le moyen de support (17), de telle sorte qu'avec le second moyen d'engagement (22) dans la position armée, un nouveau rouleau de matériau de film peut être manuellement engagé sur le premier moyen d'engagement (19, 58) et peut être subséquemment manuellement orienté en alignement avec le premier et second moyens d'engagement (19, 58, 22), de telle sorte qu'en libérant le moyen de retenue (32, 73) de la position de retenue, le second moyen d'engagement (22) peut être poussé de la position armée dans la position engagée de manière à retenir le rouleau de matériau de film entre les premier et second moyens d'engagement (19, 58, 22).

7. Dispositif de support selon l'une quelconque des revendications précédentes, **caractérisé en ce qu'**un moyen de sollicitation (30) est prévu pour pousser le second moyen d'engagement (22) axialement de la position armée à la position engagée, et pour retenir le rouleau entre les premier et second moyens d'engagement (19, 58, 22).

8. Dispositif de support selon la revendication 7, **caractérisé en ce que** le moyen de sollicitation (30) comprend un ressort de compression principal (30).

9. Dispositif de support selon l'une quelconque des revendications précédentes, **caractérisé en ce que** le premier moyen d'engagement (19, 58) comprend un premier goujon (19, 58), et le second moyen d'engagement (22) comprend un second goujon (22), les goujons respectifs étant axialement alignés l'un avec l'autre, le second goujon (22) pouvant être axialement coulissé entre la position engagée et la position armée.

10. Dispositif de support selon la revendication 9, **caractérisé en ce que** le moyen de retenue (32) coopère avec le second goujon (22) pour retenir, de façon amovible, le second goujon (22) dans la position armée.

11. Dispositif de support selon la revendication 9 ou 10, **caractérisé en ce que** le moyen de retenue (32) comprend une goupille de retenue (32) qui peut être engagée par un évidement d'engagement (38) sur le second goujon (22) afin de retenir le second goujon (22) dans la position armée.

12. Dispositif de support selon la revendication 11, **caractérisé en ce que** l'évidement d'engagement (38) est réalisé par une rainure d'engagement (38) s'étendant circonférentiellement autour du second goujon (22), et un manchon principal (27) s'étendant du moyen de support (17, 21) suivant une direction axialement relative au premier et au second goujons (19, 58, 22) supporte, pour pouvoir coulisser, le second goujon (22), de telle sorte que le second goujon (22) peut coulisser entre la position engagée et la position armée, et un manchon secondaire (34) s'étendant radialement depuis le manchon principal (27) supporte, pour pouvoir coulisser, la goupille de retenue (32), la goupille de retenue (32) pouvant coulisser dans le manchon secondaire (34) pour venir en et en dehors de la position de retenue.

13. Dispositif de support selon l'une quelconque des revendications précédentes, **caractérisé en ce que** le moyen de support (17) comprend un élément de support droit (17) et des bras de support inférieur et supérieur espacés et s'étendant latéralement (18, 54, 21, 71) pour supporter les premier et second moyens d'engagement (19, 58, 22), respectivement, le second moyen d'engagement (22) étant supporté, pour pouvoir coulisser, dans le bras de support supérieur (21).

14. Dispositif de support selon l'une quelconque des revendications précédentes, **caractérisé en ce qu'**un moyen porteur (51) est supporté sur le moyen de support (17) afin de supporter une pluralité de premiers moyens d'engagement (58) espacés les uns des autres, chaque premier moyen d'engagement (58) étant adapté pour supporter un rouleau (4) de matériau de film (3), le moyen porteur (51) étant monté, pour pouvoir se déplacer, sur le moyen de support (17) afin d'aligner séquentiellement les premiers moyens d'engagement respectifs (58) avec le second moyen d'engagement (22) afin, qu'à leur tour, ils amènent séquentiellement les rouleaux (4) sur les premiers moyens d'engagement (58) en alignement avec le second moyen d'engagement (22).

15. Dispositif de support selon la revendication 14, **caractérisé en ce que** le moyen porteur (51) est monté, pour pouvoir tourner, sur le moyen de support (17) autour d'un axe de rotation parallèle et espacé de l'axe de rouleau défini par le second moyen d'engagement (22), les premiers moyens d'engagement respectifs (58) étant situés sur un cercle primitif coaxial à l'axe de rotation du moyen porteur (51).

16. Dispositif de support selon la revendication 14 ou 15, **caractérisé en ce que** le moyen porteur (51) peut pivoter entre une position de chargement pour faciliter le chargement des rouleaux de matériau de film sur les premiers moyens d'engagement respectifs (58) et une position opérable pour faciliter l'alignement séquentiel des premiers moyens d'engagement respectifs (58) avec le second moyen d'engagement (22).

17. Dispositif de support selon l'une quelconque des revendications précédentes **caractérisé en ce que** le moyen de poussée (35) comprend un ressort de compression secondaire (35) pour pousser le moyen de retenue (32) dans la position de retenue.

18. Dispositif d'enveloppement de balles comprenant un moyen (8, 9) pour faire tourner une balle devant être enveloppée autour d'au moins un axe, et un dispositif de support (15, 50, 70) selon l'une quelconque des revendications précédentes pour supporter un rouleau (4) de matériau de film d'enveloppement (3) situé pour distribuer le matériau de film à la balle (2) de telle sorte que, lors de la rotation de la balle, le matériau de film est tiré du rouleau et est enveloppé autour de la balle (2).
